# EUROPEAN PATENT APPLICATION

(11) **EP 4 439 903 A1**
(43) Date of publication of application: **02.10.2024**
(21) Application number: 23305476.6
(22) Date of filing: 31.03.2023
(51) Int. Cl.: H02J 3/06, H02J 3/28, H02J 15/00

(54) **POWER STORAGE DEVICE AND ASSOCIATED GRID**

(71) Applicant: GE Energy Power Conversion Technology Ltd, Rugby, Warwickshire CV21 1BD (GB)
(72) Inventor: SOUA, Samir, 91140 VILLEBON-SUR-YVETTE (FR); BARBIER DE PREVILLE, Guillaume, 91140 VILLEBON SUR YVETTE (FR)
(74) Representative: Casalonga

(57) **Abstract**

A power storage device is proposed.

The power storage device comprises a dihydrogen production unit (19) connected configured to produce dihydrogen from electric power supplied by a grid and to store the produced dihydrogen, and an electric power production unit (20) configured to supply the grid with electric power from dihydrogen produced by the dihydrogen production unit.

## Description

The present invention concerns the storage of electric power.

The present invention relates more particularly to power storage devices and a grid comprising such power storage devices.

A grid may comprise renewable power supply devices comprising for example wind farms including wind turbines and/or solar farms.

It is known that power generated by renewable power supply devices fluctuates according to weather conditions.

For example, the power generated by wind turbines depends on wind speed.

When the power delivered by renewable power supply devices is greater that the grid needs, it is known to store the excess power in batteries and to release the stored power when the grid is underpowered.

It is known that the quantity of energy stored in batteries decreased over time due for example to the temperature of the batteries, and that the storage capacity of batteries decreases overt time due to the aging of the batteries and the number of charge and discharge cycles of the batteries.

It is therefore proposed to overcome wholly or partially these disadvantages.

In view of the foregoing the invention proposes a power storage device comprising a dihydrogen production unit connected configured to produce dihydrogen from electric power supplied by a grid and to store the produced dihydrogen, and an electric power production unit configured to supply the grid with electric power from dihydrogen produced by the dihydrogen production unit.

Advantageously, the dihydrogen production unit comprises a rectifier including inputs terminals intended to be connected to the grid and two output terminals, an electrolyser unit connected to the output terminals and configured to be supplied by the rectifier to produce dihydrogen.

Preferably, the rectifier is a controlled rectifier comprising bridge rectifiers extending between the two output terminals, each bridge rectifier comprising two thyristors connected together in series, a connection between two thyristors of each bridge rectifier being connected to an input terminal of the rectifier.

Advantageously, the dihydrogen production unit further comprises a first filtering unit between the rectifier and the electrolyser module to smoothen current and voltage ripples.

Preferably, the electric power production unit comprises a first power converter connected to the input terminals of the rectifier, and a fuel cell unit connected to the power converter and configured to supply the first power converter with electric power generated from dihydrogen stored in the dihydrogen production unit.

Advantageously, the first power converter comprises two input terminals connected to the fuel cell and output terminals intended to be connected to the grid, a first capacitor extending between the two terminals, two primary switching modules, each primary switching modules comprising two input connections and two output connections, a secondary switching module comprising two input connections and output connections, and a high frequency transformer, the input connections of a first primary switching module being connected to the input terminals and the output connections of the first primary switching module being connected to a primary circuit of the high frequency transformer, the output of the second primary switching module being connected to the secondary circuit of the high frequency transformer and the input connections of the secondary switching module being connected to the input connections of the secondary switching module, the output connection of the secondary switching module being connected to the output terminals.

Preferably, each primary switching module comprises two bridges extending between the two input connections, each bridge comprising two switching cells connected together in series, each output being connected to a connection between two switching cells of a bridge.

Advantageously, the power storage device further comprises a first transformer comprising a primary circuit intended to be connected to the grid and a secondary circuit connected to the input terminals of the rectifier.

Preferably, the power storage device further comprises a voltage set up circuit comprising input connections and output connections, the voltage set up circuit being configured to set up a voltage on the input connections and deliver the set-up voltage on the output connections, the output connections of voltage set up circuit being connected to the input terminals of the rectifier and intended to be connected to the grid, the electric power production unit comprising a second power converter connected to the input connections of the voltage set up circuit, and a fuel cell unit connected to the second power converter and configured to supply the second power converter with electric power generated from dihydrogen stored in the dihydrogen production unit.

Advantageously, the second power converter comprises two input terminals connected to the fuel cell and output terminals connected to the input connections of voltage set up circuit, and a secondary switching module comprising two input connections and two output connections, the input connections of the secondary switching module being connected to the input terminals of the second power converter and the output connection of the secondary switching module being connected to the output terminals of the second power converter.

Preferably, the set-up circuit comprises a second transformer comprising a primary circuit intended to be connected to the grid and a secondary circuit comprising a first set of at least one winding connected to the input connections of the set-up circuit and a second set of at least one winding connected to the output connections of the set-up circuit, the first set and second set being configured to set up at least one voltage received on the input connections of the set-up circuit.

Advantageously, each transformer comprises a tap changer configured to modify the value of a tension in the secondary circuit of the said transformer.

Preferably, the secondary switching module comprises a capacitor extending between the input connections, bridges extending between the two input connections, each bridge comprising two switching cells connected together in series, each output being connected to a connection between two switching cells of a bridge.

Advantageously, the electric power production unit further comprises a second filtering unit between the fuel cell and the first or second power converter to smoothen current and voltage ripples.

Another object of the invention relates to a grid comprising at least one power storage se defined above and a power supply device connected to the grid.

Other characteristics and advantages of the invention will emerge on reading the following description of embodiments of the invention, provided solely by way of non-limiting examples and with reference to the drawings in which:
Figure 1 illustrates schematically an example of a grid according to the invention,
Figure 2 illustrates schematically a first example of a power storage device according to the invention,
Figure 3 illustrates schematically an example of a rectifier according to the invention,
Figure 4 illustrates schematically a first example of a first power converter according to the invention,
Figure 5 illustrates schematically an example of a switching cell according to the invention, and
Figure 6 illustrates schematically a second example of the power storage device according to the invention.

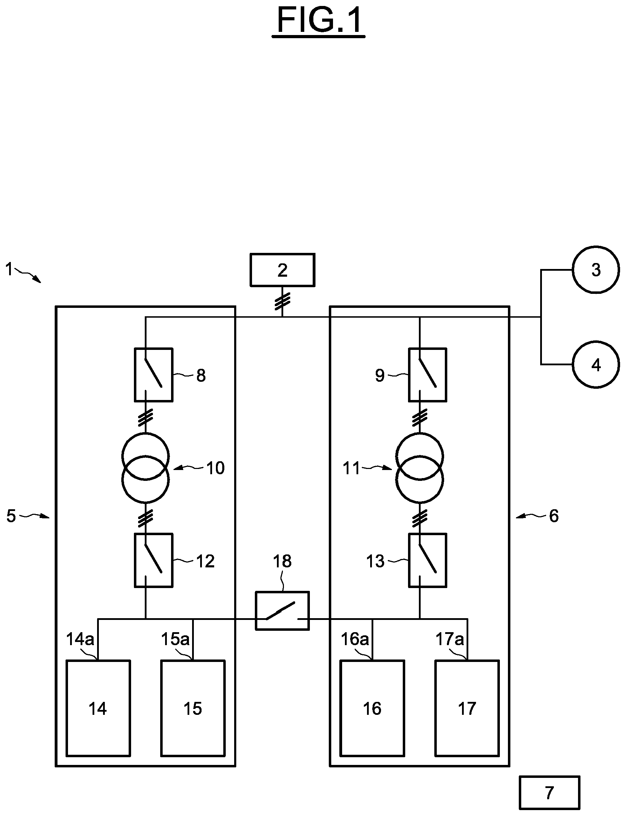

Figure 1 illustrates schematically an example of a grid 1 intended to supply electric power to a load 2.

The load 2 comprises for example another grid and/or a device.

The grid 1 is for example a three-phase grid.

In variant, the grid 1 may comprise more or less than three phases.

The grid 1 comprises renewable power supply devices 3, 4 including for example a wind farm and a solar farm, and power storage systems 5, 6.

The grid 1 may comprise one renewable power supply device or more than two renewable power supply devices.

An energy management controller 7 manages energy flows in the grid 1.

Each power storage system 5, 6 comprises for example a first switching circuit 8, 9, a transformer 10, 11, a second switching circuit 12, 13, and two power storage devices 14, 15, 16, 17 comprising each a connecting interface 14a, 15a, 16a, 17a.

For each power storage system 5, 6, the first switching circuit 8, 9 connects a primary circuit of the transformer 10, 11 to the load 2 and the renewable power supply devices 3, 4.

The second switching circuit 12, 13 connects a secondary circuit of the transformer 10, 11 to the connecting interface 14a, 15a, 16a, 17a of the power storage device 14, 15, 16, 17.

The gird 1 may further comprise a third switching circuit 18 connecting the power storage devices 14, 15 of one power storage system 5 to the power storage devices 16, 17 of another power storage system 6.

The grid 1 further comprises current sensors and voltage sensors (not represented) connected to the energy management controller 7.

The energy management controller 7 controls the power storage devices 14, 15, 16, 17, the first switching circuit 8, 9, the second switching circuit 12, 13, and the third switching circuit 18 to connect or disconnect the power storage devices 14, 15, 16, 17 to store excess power generated by the renewable power supply devices 3, 4 in at least one power storage device 14, 15, 16, 17 in respect to the needs of the load 2 or to deliver power stored in at least one power storage device 14, 15, 16, 17 in the grid 1 when the power generated by renewable power supply devices 3, 4 are not enough to supply the load 2 from the measurements delivered by the current sensors and voltage sensors.

The energy management controller 7 connects or disconnects one or more power storage devices 14, 15, 16, 17 according to the amount of power to store in the power storage devices 14, 15, 16, 17 or to supply in the grid 1 from power stored in the power storage devices 14, 15, 16, 17.

The grid 1 may comprise one or more than two power storage systems 5, 6, and each power storage system 5, 6 may comprise one or more than two power storage devices 14, 15, 16, 17.

The number of power storage systems 5, 6 and the number of power storage devices 14, 15, 16, 17 are determined according to the needed power to be stored in the power storage devices 14, 15, 16, 17.

The first switching circuits 8, 9, second switching circuits 12, 13, and the third switching circuit 18 may comprise breakers.

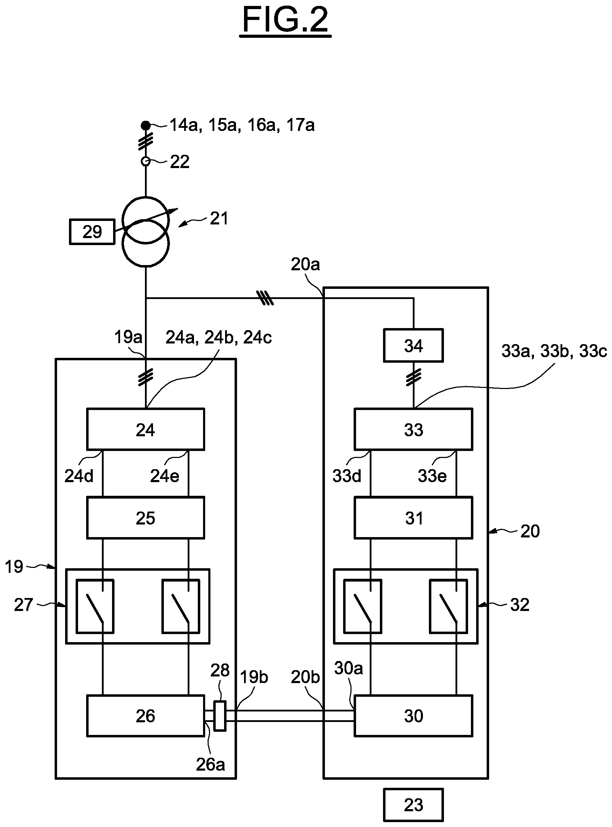

Figure 2 illustrates schematically a first example of the power storage device 14, 15, 16, 17.

The power storage device comprises a dihydrogen production unit 19 to produce dihydrogen from electric power supplied by the grid 1, and an electric power production unit 20 to supply the grid 1 with electric power from dihydrogen produced by the dihydrogen production unit 19.

When the renewable power supply devices 3, 4 deliver more power than needed by the grid 1, the energy management controller 7 controls the power storage device so that the dihydrogen production unit 19 produces dihydrogen from the excess power and stores the dihydrogen.

When the renewable power supply devices 3, 4 deliver a power than is not sufficient to cover the needs of the grid 1, the energy management controller 7 controls the power storage device so that the power production unit 20 produces power from the stored dihydrogen, the produced power supplying the grid 1.

The power storage device allows to store the excess power in the form of dihydrogen in a gas containing, for example in a tank, which is less sensitive to aging as batteries or supercapacitors.

The dihydrogen may be stored in the gas containing in gaseous form.

Unlike to the use of batteries or supercapacitors to store the excess power, the quantity of dihydrogen stored in the gas containing does not diminish over time, is not sensible to the temperature variations, and does not depend on the number of charge and discharge cycles.

The power storage device further comprises a first transformer 21 comprising a primary circuit connected to the connecting interface 14a, 15a, 16a, 17a of the power storage device, a current sensor 22 between the connecting interface and the first transformer 21 to measure current in each phase, and a power storage controller 23 controlling the dihydrogen production unit 19 and the electric power production unit 20 from measurements delivered by the current sensor 22.

The dihydrogen production unit 19 comprises an input interface 19a connected to a secondary circuit of the first transformer 21 and a gas output 19b.

The dihydrogen production unit 19 further comprises a rectifier 24 comprising input terminals 24a, 24b, 24c connected to the input interface 19a, the number of input terminals being equal to the number of phases of the grid 1.

The dihydrogen production unit 19 further comprises a first filtering unit 25 comprising two inputs connected to two output terminals 24d, 24e of the rectifier 24.

The rectifier 24 delivers a direct current (DC) on its output terminals 24d, 24e from an alternative current (AC) received on its input terminals 24a, 24b, 24c.

The dihydrogen production unit 19 comprises an electrolyser module 26 producing dihydrogen from the DC current delivered by outputs of the first filtering unit 25.

The dihydrogen production unit 19 may further comprise a switching circuit 27 connecting the outputs of the first filtering unit 25 to inputs of the electrolyser module 26.

The first filtering unit 25 is made from inductances and capacitors, and smooths current and voltage ripples delivered by the rectifier 24 to improve the duration of the electrolyser module 26.

The electrolyser module 26 further comprises a gas output 26a connected to the gas containing 28 storing dihydrogen produced by the electrolyser module 26.

The gas containing 28 may be located inside the dihydrogen production unit 19 or outside the dihydrogen production unit 19 and inside the power storage device.

In another embodiment, the gas containing 28 is located outside the power storage device.

When the electrolyser module 26 is aging, the needed value of the voltage at its inputs to work increases.

In order to adjust the value of the voltage and the minimize the reactive power generated by the rectifier 24, the first transformer 21 may comprise a tap changer 29 to modify the value of a tension in the secondary circuit of the first transformer 21.

The electric power production unit 20 comprises a connection interface 20a connected to the input interface 19a of the dihydrogen production unit 19 and a gas input 20b connected to the gas output 19b of the dihydrogen production unit 19.

The electric power production unit 20 further comprises a fuel cell unit 30 comprising a gas input 30a connected to the gas input 20b of the electric power production unit 20 and connected to a second filtering unit 31.

The electric power production unit 20 may comprise a switching circuit 32 connecting outputs of the fuel cell module 30 to inputs of the second filtering unit 31.

The electric power production unit 20 further comprises a first power converter 33 comprising output terminals 33a, 33b, 33c and two inputs terminals 33d, 33e connected to outputs of the second filtering unit 31.

The fuel cell module 30 is intended to generate electric power from dihydrogen supplied by the dihydrogen production unit 19, and the second filtering unit 31 is intended to smooth current and voltage ripples and to supply the first power converter 33 with the filtered currents and voltages.

The output terminals 33a, 33b, 33c of the first power converter 33 are connected to the connection interface 20a.

The first power converter 33 is made of switching cells as discloses in the following.

The electric power production unit 20 may further comprise a third filtering unit 34 between the first power converter and the connection interface 20a to filter the AC currents delivered by the output terminals 33a, 33b, 33c of the first power converter 33.

The third filtering unit 34 filters high frequencies to suppress harmonics generated by the switching cells of the first power converter 34.

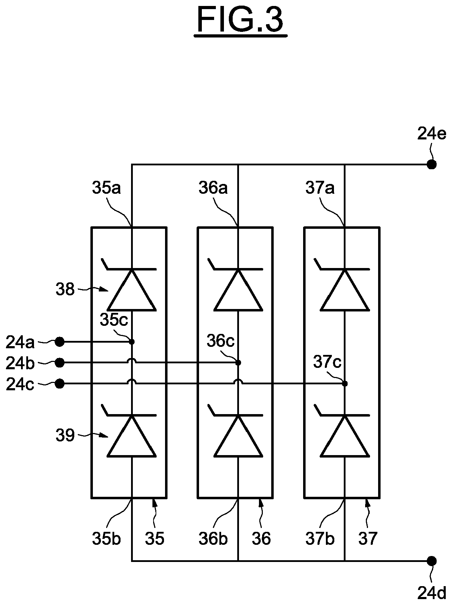

Figure 3 illustrates schematically an example of rectifier 24.

The rectifier 24 may be a controlled rectifier controlled by the power storage controller 23 to supply the electrolyser module 26.

The controlled rectifier is also controlled by the power storage controller 23 to maintain polarization of the electrolyser module 26 when the power storage device 14, 15, 16, 17 delivers electric power so that the temperature of the electrolyser module 26 does not decreased allowing to restart quickly the electrolyser module 26 to generate dihydrogen.

The controlled rectifier 24 comprises bridge rectifiers 35, 36, 37, the number of bridge rectifiers being equal to the number of phases of the grid 1.

Each bridge rectifier 35, 36, 37 comprises two connections 35a, 35b, 36a, 36b, 37a, 37b.

A first connection 35a, 36a, 37a is connected to a first output terminal 24e of the rectifier 24 and the second connection 35b, 36b, 37b is connected to the second output terminal 24d of the rectifier 24.

Each bridge rectifier 35, 36, 37 comprises a first thyristor 38 and a second thyristor 39 connected together in series so that the anode of the first thyristor 38 is connected to the anode of the second thyristor 39.

The cathode of the first thyristor 38 is connected to the first connection 35a, 36a, 37a, the anode of the second thyristor 39 is connected to the second connection 35b, 36b, 37b, and the gate of the thyristors 38, 39 is connected to the power storage controller 23.

A connection 35c between the thyristors 38, 39 of a first bridge rectifier 35 is connected to a first input terminal 24a of the rectifier 24, a connection 36c between the thyristors 38, 39 of a second bridge rectifier 36 is connected to a second input terminal 24b of the rectifier 24, and a connection 37c between the thyristors 38, 39 of the third bridge rectifier 37 is connected to the third input terminal 24c of the rectifier 24.

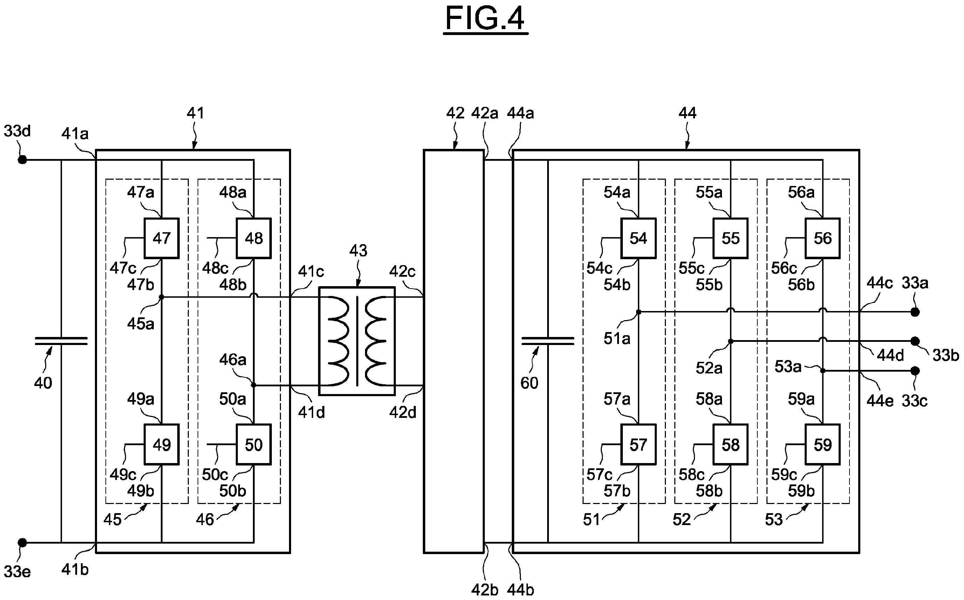

Figure 4 illustrates schematically an example of the first power converter 31.

The first power converter 31 comprises a first capacitor 40 extending between the two input terminals 33d, 33e of the first power converter 31, two primary switching modules 41, 42, a high frequency transformer 43, and a secondary switching module 44.

Each primary switching module 41, 42 comprises a first input connection 41a, 42a, a second input connection 41b, 42b, a first output connection 41c, 42c, and a second output connection 41d, 42d.

The secondary switching module 44 comprises a first input connection 44a, a second input connection 44b, a first output connection 44c, a second output connection 44d, and a third output connection 44e.

The number of output connection is equal to the number of phase.

The first input connection 41a of a first primary switching module 41 is connected to a first input terminal 33d of the first power converter 33 and the second input connection 41b of the first primary switching module 41 is connected to the second input terminal 33e of the first power converter 33.

The output connections 41c, 41d of the first primary switching module 41 are connected to a winding of a primary circuit of the high frequency transformer 43.

The output connections 42c, 42d of the second primary switching module 42 are connected to a winding of a secondary circuit of the high frequency transformer 43.

The first input connection 42a of the second primary switching module 42 is connected to the first input connection 44a of the secondary switching module 44 and the second input connection 42b of the second primary switching module 42 is connected to the second input connection 44b of the secondary switching module 44.

The first output connection 44c is connected to a first output terminal 33a of the first power converter 33, the second output connection 44d is connected to a second output terminal 33b of the first power converter 33, and the third output connection 44e is connected to the third output terminal 33c of the first power converter 33.

As the first and second primary switching modules 41, 42 are identical, only the first primary switching module 41 is detailed in the following.

The first primary switching module 41 comprises a first switching bridge 45 and a second switching bridge 46.

Each switching bridge 45, 46 comprises a first switching cell 47, 48 and a second switching cell 49, 50.

Each switching cell 47, 48, 49, 50 comprises a first connection 47a, 48a, 49a, 50a, a second connection 47b, 48b, 49b, 50b, and a third connection 47c, 48c, 49c, 50c connected to the power storage controller 23.

The first connection 47a, 48a of the first switching cells 47, 48 are connected to the first input 41a of the first primary switching module 41 and the second connection 49b, 50b of the second switching cells 49, 50 are connected to the second input 41b of the first primary switching module 41.

The first connection 49a of the second switching cell 49 of the first switching bridge 45 is connected to the second connection 47b of the first switching cell 47 of the first switching bridge 45.

The first switching bridge 45 further comprises a connection 45a between the first and second cells 47, 49, the connection 45a being connected to the first output connection 41c of the first primary switching module 41.

The first connection 50a of the second switching cell 50 of the second switching bridge 46 is connected to the second connection 48b of the first switching cell 48 of the second switching bridge 46.

The second switching bridge 46 further comprises a connection 46a between the first and second cells 48, 50, the connection 46a being connected to the second output connection 41d of the first primary switching module 41.

The secondary switching module 44 comprises a first switching bridge 51, a second switching bridge 52, a third switching bridge 53.

The number of switching bridge is equal to the number of phase.

Each switching bridge 51, 52, 53 comprises a first switching cell 54, 55, 56 and a second switching cell 57, 58, 59.

Each switching cell 54, 55, 56, 57, 58, 59 comprises a first connection 54a, 55a, 56a, 57a, 58a, 59a, a second connection 54b, 55b, 56b, 57b, 58b, 59b, and a third connection 54c, 55c, 56c, 57c, 58c, 59c connected to the power storage controller 23.

The first connection 54a, 55a, 56a of the first switching cells 54, 55, 56 are connected to the first input connection 44a of the secondary switching module 44 and the second connection 57b, 58b, 59b of the second switching cells 57, 58, 59 are connected to the second input connection 44b of the secondary switching module 44.

The first connection 57a of the second switching cell 57 of the first switching bridge 51 is connected to the second connection 54b of the first switching cell 54 of the first switching bridge 51.

The first switching bridge 51 further comprises a connection 51a between the first and second cells 54, 57, the connection 51a being connected to the first output connection 44c of the secondary switching module 44.

The first connection 58a of the second switching cell 58 of the second switching bridge 52 is connected to the second connection 55b of the first switching cell 55 of the second switching bridge 52.

The second switching bridge 52 further comprises a connection 52a between the first and second cells 55, 58, the connection 52a being connected to the second output connection 44d of the secondary switching module 44.

The first connection 59a of the second switching cell 59 of the third switching bridge 53 is connected to the second connection 56b of the first switching cell 56 of the third switching bridge 53.

The third switching bridge 53 further comprises a connection 53a between the first and second cells 56, 59, the connection 53a being connected to the third output connection 44e of the secondary switching module 44.

The secondary switching module 44 further comprises a second capacitor 60 extending between the first and second input connections 44a, 44b.

The high frequency transformer 43 allows a galvanic insulation between the fuel cell 30 and the connection interface 20a of the electric power production unit 20.

In order to reduce the volume of the high frequency transformer 43, the first primary switching module 41 is intended to deliver for example a current having a frequency between 100 and 200 kHz.

The switching cells of the first primary switching unit 41, the second primary switching unit 42, and the secondary switching unit 44 are controlled by the power storage controller 23 implementing for example a Pulse Width Modulation (PWM) algorithm.

The first power converter 20 allows to increase the value of voltages delivered by the fuel cell unit 30 at the required value to supply the grid 1 and the rectifier 24 without voltage set up transformer.

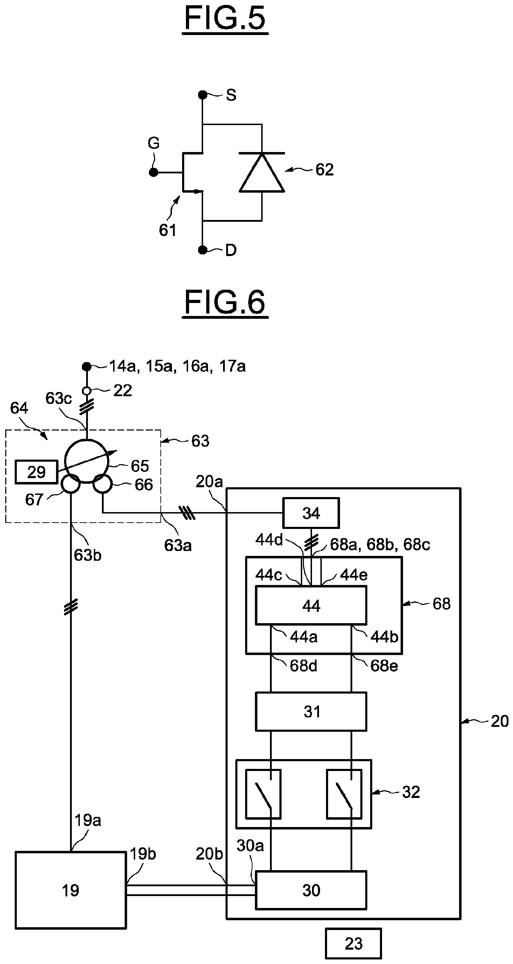

Figure 5 schematically illustrates an example of switching cells 47, 48, 49, 50, 54, 55, 56, 57, 58, 59.

The switching cell comprises a transistor 61 and a diode 62.

The source S of the transistor 61 is connected to the first connection of the switching cell, the drain D of the transistor 61 is connected to the second connection of the switching cell, and the gate G of transistor 61 is connected to the first connection of the switching cell.

The cathode of the diode 62 is connected to the source S and the anode of the diode 62 is connected to the drain D.

The transistor 61 may be a field effect transistor, for example an insulated-gate bipolar transistor (IGBT).

Figure 6 schematically illustrate a second example of the power storage device 14, 15, 16, 17.

The power storage device comprises the dihydrogen production unit 19, a voltage set up circuit 63, and another embodiment of the electric power production unit 20.

The voltage set up circuit 63 comprises input connections 63a, first output connections 63b and second output connections 63c.

The voltage set up circuit 63 is intended to set up a voltage on the input connections 63a and deliver the set-up voltage on the first output connections 63b.

The input connections 63a are connected to the connection interface 20a, the first output connections 63b are connected to the input interface 19a of the dihydrogen production unit 19, and the second output connections 63c are connected to the connecting interface 14a, 15a, 16a, 17a of the power storage device 14, 15, 16, 17.

The voltage set up circuit 63 may comprise a second transformer 64 comprising a primary circuit 65 connected to the second output connections 63c, a secondary circuit comprising a first set 66 of windings connected to the input connections 63a, and a second set 67 of windings connected to the first output connections 63b.

The first set 66 and the second set 67 are designed to set up voltages received on the input connections 63a of the set-up circuit 63.

The second transformer 64 further comprises the tap changer 29.

The electric power production unit 20 comprises the electrolyser unit 30 connected to the power storage device 19, the switching circuit 32 connected to the electrolyser unit 30, the second filtering unit 31 connected to the switching circuit 32, the power storage controller 23, the current sensor 22, and may comprise the third filtering unit 34.

The electric power production unit 20 further comprises a second power converter 68 comprising output terminals 68a, 68b, 68c and two inputs terminals 68d, 68e connected to outputs of the second filtering unit 31.

The output terminals 68a, 68b, 68c of the second power converter 68 are connected to the connection interface 20a of the electric power production unit 20 through the third filtering unit 34.

The second power converter 68 comprises the secondary switching module 44.

The first input connection 44a of the secondary switching module 44 is connected to a first input terminals 68d of the second power converter 68, the second input connection 44b of the secondary switching module 44 is connected to a second input terminal 68e of the second power converter 68, a first output connection 44c of the secondary switching module 44 is connected to a first output terminal 68a of the second power converter 68, a second output connection 44d of the secondary switching module 44 is connected to a second output terminal 68b of the second power converter 68, and the third output connection 44e of the secondary switching module 44 is connected to the third output terminal 68c of the second power converter 68.

As the values of the voltages delivered by the second power converter 68 are generally less than the voltage values required by the grid 1 and the rectifier 24, the set-up circuit 63 sets up the voltages delivered by the second power converter 68.

An example of a method for controlling the power storage devices is exposed in the following.

It is assumed that the power storage device 14 is connected to the grid 1, and that the energy management controller 7 has closed the first switching circuit 8 and the second switching circuit 12 of the power storage system 5.

When the energy management controller 7 detects excess power, the energy management controller 7 on the grid 1 controls the power storage controller 23 so that the power storage device 14 stores the excess power.

The power storage controller 23 closes the switching circuit 27 of the dihydrogen production unit 19, controls the rectifier 24 to supply the electrolyser module 26 with the excess power, and controls the electrolyser module 26 to generate dihydrogen.

The generated dihydrogen may be stored in the containing 28.

The power storage controller 23 further controls the secondary switching module 44 of the first power converter 33 or second power converter 68 so that the secondary switching module 44 acts as a static synchronous compensator (STATCOM).

The power storage controller 23 controls the secondary switching module 44 so that the power factor determined from measurements of the current sensor 22 and the voltages at the output terminals 33a, 33b, 33c, 68a, 68b, 68c of the said power converter is equal to 1, and to mitigate the harmonics generated by the rectifier 24.

The voltages at the output terminals 33a, 33b, 33c, 68a, 68b, 68c of the said power converter may be determined from a control signal of the secondary switching module 44, for example the PWM signal controlling the switching cells of the secondary switching module 44, or may be measured by a voltage sensor.

The secondary switching module 44 acts as a power factor corrector and an active filter.

When the energy management controller 7 detects that the grid 1 does not deliver enough power, the energy management controller 7 controls the power storage controller 23 so that the power storage device 14 delivers the stored power on the grid 1.

The power storage controller 23 keeps the switching circuit 27 of the dihydrogen production unit 19 closed, closes the switching circuit 32, controls the fuel cell unit 30 to generate electric power from dihydrogen generated by the dihydrogen production unit 19, and controls the switching cells of the first power converter 31 to inject power on the gird 1 through the first transformer 21.

Further, the power storage controller 23 controls the controlled rectifier 24 to maintain the polarization of the electrolyser unit 26.

The electrolyser unit 26 may comprise a cooling loop to maintain the temperature of the electrolyser unit 26 at a first predetermined temperature.

The first predetermined temperature is associated to the temperature wherein when the electrolyser unit 26 is supplied with power, the electrolyser unit 26 produces dihydrogen with the shortest latency time.

A cooling fluid such as water may flow in the cooling loop to regulate the temperature of the electrolyser unit 26.

When the temperature of the cooling fluid heated by the electrolyser unit 26 is below a temperature threshold, for example when the grid 1 does not supply the electrolyser unit 26 with power or with not enough power so that the electrolyser unit 26 reaches the first predetermined temperature, the power storage controller 23 controls the electrolyser unit 26 so that dihydrogen circulate between the gas containing 28 and the electrolyser unit 26.

The dihydrogen circulation between the gas containing 28 and the electrolyser unit 26 keeps the electrolyser unit 26 at the first predetermined temperature to allow faster dihydrogen production of the electrolyser unit 26 as soon as power comes up from the grid 1.

The maintaining of the electrolyser unit 26 at the first predetermined temperature avoids delays to produce dihydrogen the delays corresponding to a heating duration so that the electrolyser unit 26 reaches the first predetermined temperature.

In a similar way, the fuel cell unit 30 may comprise a cooling loop to maintain the temperature of the fuel cell unit 30 at a second predetermined temperature.

The second predetermined temperature is associated to the temperature wherein when the fuel cell unit 30 is supplied with dihydrogen, the fuel cell unit 30 produces power with the shortest latency time.

A cooling fluid such as water may flow in the cooling loop to regulate the temperature of the fuel cell unit 30.

When the temperature of the cooling fluid heated by the fuel cell unit 30 is below a temperature threshold, for example when the grid 1 does not need power stored in the power storage device 14 or when the power delivered by the fuel cell unit is not enough power so that the fuel cell unit 30 reaches the second predetermined temperature, the power storage controller 23 controls the fuel cell unit 30 so that dihydrogen circulate between the gas containing 28 and the fuel cell unit 30.

The dihydrogen circulation between the gas containing 28 and the fuel cell unit 30 keeps the fuel cell unit 30 at the second predetermined temperature to allow faster power production of the fuel cell unit 30 as soon as the grid 1 needs power.

The maintaining of the fuel cell unit 30 at the second predetermined temperature avoids delays to produce power from dihydrogen stored in the gas containing 28, the delays corresponding to a heating duration so that fuel cell unit 30 reaches the second predetermined temperature.

The energy management controller 7 further controls the tap changer 29 to mitigate the reactive power generated by the rectifier 24.

The energy management controller 7 may further control at least another power storage device to mitigate harmonics in the grid 1.

## Claims

1. Power storage device (14, 15, 16, 17), **characterized in that** the power storage device comprises a dihydrogen production unit (19) connected configured to produce dihydrogen from electric power supplied by a grid (1) and to store the produced dihydrogen, and an electric power production unit (20) configured to supply the grid with electric power from dihydrogen produced by the dihydrogen production unit.

2. Power storage device according to claim 1, wherein the dihydrogen production unit (19) comprises a rectifier (24) including inputs terminals (24a, 24b, 24c) intended to be connected to the grid (1) and two output terminals (24d, 24e), an electrolyser unit (26) connected to the output terminals and configured to be supplied by the rectifier to produce dihydrogen.

3. Power storage device according to claim 2, wherein the rectifier (24) is a controlled rectifier comprising bridge rectifiers (35, 36, 37) extending between the two output terminals (24d, 24e), each bridge rectifier comprising two thyristors (38, 39) connected together in series, a connection (35c, 36c, 37c) between two thyristors of each bridge rectifier being connected to an input terminal (24a, 24b, 24c) of the rectifier.

4. Power storage device according to claim 2 or 3, wherein the dihydrogen production unit (19) further comprises a first filtering unit (25) between the rectifier (24) and the electrolyser module (26) to smooth current and voltage ripples.

5. Power storage device according to any one of claims 2 to 4, wherein the electric power production unit (20) comprising a first power converter (33) connected to the input terminals (24a, 24b, 24c) of the rectifier (24), and a fuel cell unit (30) connected to the power converter and configured to supply the first power converter with electric power generated from dihydrogen stored in the dihydrogen production unit (19).

6. Power storage device according to claim 5, wherein the first power converter (33) comprises two input terminals (33d, 33e) connected to the fuel cell (30) and output terminals (33a, 33b, 33c) intended to be connected to the grid (1), a first capacitor (40) extending between the two terminals, two primary switching modules (41, 42), each primary switching modules comprising two input connections (41a, 41b, 42a, 42b) and two output connections (41c, 41d, 42c, 42d), a secondary switching module (44) comprising two input connections (44a, 44b) and output connections (44c, 44d, 44e), and a high frequency transformer (43), the input connections (41a, 41b) of a first primary switching module (41) being connected to the input terminals and the output connections (41c, 41d) of the first primary switching module (41) being connected to a primary circuit of the high frequency transformer, the output (42c, 42d) of the second primary switching module (42) being connected to the secondary circuit of the high frequency transformer and the input connections (42a, 42b) of the secondary switching module (42) being connected to the input connections (44a, 44b) of the secondary switching module (44), the output connection (44c, 44d, 44e) of the secondary switching module being connected to the output terminals.

7. Power storage device according to claim 6, wherein each primary switching module (41, 42) comprising two bridges (45, 46) extending between the two input connections (41a, 41b), each bridge comprising two switching cells (47, 48, 49, 50) connected together in series, each output (41c, 41d) being connected to a connection (45a, 46a) between two switching cells of a bridge.

8. Power storage device according to claim 6 or 7, further comprising a first transformer (21) comprising a primary circuit intended to be connected to the grid (1) and a secondary circuit connected to the input terminals (24a, 24b, 24c) of the rectifier (24).

9. Power storage device according to any one of claims 2 to 4, further comprising a voltage set up circuit (63) comprising input connections (63a) and output connections (63b, 63c), the voltage set up circuit being configured to set up a voltage on the input connections (63a) and deliver the set-up voltage on the output connections (63b, 63c), the output connections of voltage set up circuit being connected to the input terminals (24a, 24b, 25c) of the rectifier (24) and intended to be connected to the grid (1), the electric power production unit (20) comprising a second power converter (68) connected to the input connections (63a) of the voltage set up circuit, and a fuel cell unit (30) connected to the second power converter and configured to supply the second power converter with electric power generated from dihydrogen stored in the dihydrogen production unit (19).

10. Power storage device according to claim 9, wherein the second power converter (68) comprises two input terminals (68d, 68e) connected to the fuel cell (30) and output terminals (68a, 68b, 68c) connected to the input connections (63a) of voltage set up circuit (63), and a secondary switching module (44) comprising two input connections (44a, 44b) and two output connections (44d, 44e), the input connections of the secondary switching module being connected to the input terminals of the second power converter and the output connection of the secondary switching module being connected to the output terminals of the second power converter.

11. Power storage device according to claim 9 or 10, wherein the set-up circuit (63) comprises a second transformer (64) comprising a primary circuit (65) intended to be connected to the grid (1) and a secondary circuit comprising a first set (66) of at least one winding connected to the input connections (63a) of the set-up circuit and a second set (67) of at least one winding connected to the output connections (63b, 63c) of the set-up circuit, the first set and second set being configured to set up at least one voltage received on the input connections of the set-up circuit.

12. Power storage device according to claim 8 or 11, wherein each transformer (21, 64) comprises a tap changer (29) configured to modify the value of a tension in the secondary circuit of the said transformer.

13. Power storage device according to any one of claims 6, 7, 8, 10, and 11 depending on claim 10, wherein the secondary switching module (44) comprises a capacitor (60) extending between the input connections (44a, 44b), bridges (51, 52, 53) extending between the two input connections, each bridge comprising two switching cells (54, 55, 56, 57, 58, 59) connected together in series, each output (44c, 44d, 44e) being connected to a connection (51a, 52a, 53a) between two switching cells of a bridge.

14. Power storage device according to any one of claims 5 to 13 wherein the electric power production unit (20) further comprises a second filtering unit (31) between the fuel cell (30) and the first or second power converter (33, 68) to smoothen current and voltage ripples.

15. Grid (1) comprising at least one power storage (14, 15, 16, 17) according to any one of claims 1 to 14 and a power supply device (3, 4) connected to the grid.
